# EUROPÄISCHE PATENTSCHRIFT

(11) **EP 2 964 507 B1**
(45) Veröffentlichungstag und Bekanntmachung des Hinweises auf die Patenterteilung: **26.09.2018**
(21) Anmeldenummer: 14717665.5
(22) Anmeldetag: 04.03.2014
(51) Int. Cl.: B62B 3/18, B62B 3/02

(54) **ZUSAMMENLEGBARER VERKAUFS- UND TRANSPORTBEHÄLTER**
FOLDABLE CONTAINER FOR SHOPPING AND TRANSPORT
RÉCIPIENT PLIABLE POUR TRANSPORT ET VENTE

(30) Priorität: 08.03.2013 DE 202013002197 U; 27.06.2013 DE 202013005742 U; 21.11.2013 DE 202013010481 U
(43) Veröffentlichungstag der Anmeldung: 13.01.2016
(73) Patentinhaber: Kesseböhmer Holding KG, 49152 Bad Essen (DE); Lidl Stiftung & Co. KG, 74172 Neckarsulm (DE)
(72) Erfinder: LINDEMEIER, Karl-Heinrich, 32130 Enger (DE)
(74) Vertreter: Busse & Busse
(86) Internationale Anmeldenummer: PCT/EP2014/000549
(87) Internationale Veröffentlichungsnummer: WO 2014/135270

(56) Entgegenhaltungen:
- WO-A1-2005/012060
- WO-A1-2009/071867
- DE-A1- 2 021 914
- DE-A1- 2 238 618
- DE-U1- 20 108 397
- DE-U1-202010 003 310
- GB-A- 1 482 409
- JP-A- H0 924 837
- JP-A- H0 976 917
- JP-A- H08 188 158
- JP-U- S5 110 762

## Beschreibung

Die Erfindung betrifft einen zusammenlegbaren Verkaufs- und Transportbeh älter mit einen großvolumigen Gitterkorb bildenden Gitterwänden gemäß dem Oberbegriff des Anspruchs 1.

Bei einem bekannten zusammenlegbaren Transportbehälter gemäß DE 20 2004 014 597 U ist ein System realisiert, bei dem der Behälter in den Eckbereichen mit jeweiligen einstückigen Vertikalstreben versehen ist und dabei zwei diagonal gegenüberliegende Vertikalstreben gegenüberliegender Längsseitenwände jeweils um eine Hochachse schwenkbare Querseitenwände tragen. Damit sind im Bereich des Behälters zwei Klappeinheiten gebildet, die nach einem gegensinnigen Einklappen der schwenkbaren Querseitenwände zur Längsseitenwand hin mit dem Grundrahmen in eine Packstellung zusammengelegt werden. Die zusammengelegten Behältnisse können dann raumsparend in einer Warteposition untergebracht werden.

In DE 20 2007 015 619 ist ein zusammenlegbares Transport- und Lagerbehältnis gezeigt, bei dem die aus den zumindest zwei verlagerbaren Seitenwänden bestehenden Klappeinheiten in einer horizontalen Übereinanderlage positionierbar sind, derart, dass dann mehrere der Behältnisse in einer vertikalen Stapellage übereinander positioniert werden können.

Bei einem zusammenlegbaren Verkaufsbehälter in Form eines Gittertisches gemäß DE 20 2010 003310U ist zwischen den gegenüberliegenden Längsstreben der Seitenwände ein Verbindungsriegel angeordnet, der senkrecht auf die beiden gegenüberliegenden Streben der Längsseitenwände trifft.

Weitere Konstruktionen von Verkaufs- und Transportbehältern sind in DE 38 36 438 A1, DE 94 04 906U1, FR 2 078 607 A5, WO 91/12999 A1,JP H08-217 073 A und JP H09-66 939 A gezeigt. Der Stand der Technik zeigt auch Behälterausführungen, bei denen weitere konstruktive Details verändert sind. Dies betrifft jeweiligen Lösungen gemäß DE 41 31 368 A1, DE 88 08 936 U1, DE 22 18 400 A, DE 10 83 183 A, DE 20 21 914 A und DE 17 36 989 U.

Gemäß DE 22 38 618, auf der der Oberbegriff von Anspruch 1 basiert, ist ein Transportwagen für Stückgut vorgeschlagen, bei dem ein U- oder Z-förmiger Grundrahmen mit in einem Gestell gehaltenen Seitenwänden versehen ist. Diese sind schwenkbar an Holmen gehalten. Auch der Behälter gemäß GB 1 482 409 geht von einem Z-förmigen Grundrahmen aus, der als stabile Stützstruktur für einen Rahmen mit schwenkbaren Seitenwänden vorgesehen ist. Eine derartige stabile Stützkontur weist auch das Chassis eines Rollcontainers gemäß WO 2009/071867 A1 auf.

Die Erfindung befasst sich mit dem Problem, einen zusammenlegbaren Verkaufs- und Transportbehälter in Form eines Gittertisches zu schaffen, der mit geringem technischem Aufwand in eine Nichtgebrauchsstellung verbringbar ist, dabei wenige Bauteile zu bewegen sind und mit geringen Belastungen einer Bedienperson die Verlagerung von Behältnissen in die Nichtgebrauchsstellung möglich ist.

Die Erfindung löst diese Aufgabe mit einem die Merkmale des Anspruchs 1 aufweisenden Verkaufs- und Transportbehälter in Form eines Gittertisches. Hinsichtlich wesentlicher weiterer Ausgestaltungen wird auf die Ansprüche 2 bis 19 verwiesen.

Zusammenlegbare Verkaufs- und Transportbehälter sind in Form so genannter Gittertische bekannt, wobei jeweilige Seitenwände an Vertikalstreben schwenkbar gehalten und diese Vertikalstreben bodenseitig mit einem Grundrahmen verbunden sind. Mit diesem Grundkonzept von Gittertischen ist durch wechselseitige Klappverlagerung von Seitenwänden eine platzsparende Nichtgebrauchsstellung des Gittertisches in unterschiedlichen Varianten erreichbar.

Der Grundrahmen weist zwischen zwei paarweise im Bereich einer Seitenwand zusammenwirkenden Vertikalstreben jeweils eine ortsfeste Stützstrebe als Längsverbinder auf. Ausgehend vom Bereich diesen beiden Stützstreben gegenüberliegender Seitenwände sind diese mit zumindest einer zusätzlichen diagonalen Verbindungsstrebe verbunden. Damit ist zwischen den diagonal gegenüberliegenden Vertikalstreben der Wände ein gemeinsames Bauteil so angeordnet, dass eine funktionale Stabilisierung des Behälters erreicht ist. Mit dieser Verbindungsstrebe wird im Bereich des Grundrahmens eine in Draufsicht "Z-förmige" Stützkontur geschaffen, die den Verkaufs- und Transportbehälter sowohl in der Gebrauchs- als auch Nichtgebrauchsstellung hinreichend stabil untergreift.

Ausgehend von den an sich bekannten Verlagerungsmöglichkeiten im Bereich der Längs- und Querseitenwände können diese paarweise zusammenwirkend nunmehr nach Entnahme des Bodenteils so verschwenkt werden, dass oberhalb der Z-Struktur des Grundrahmens ein weitgehend freier Raum gebildet wird und nur noch die jeweiligen diagonalen Verbindungsstreben der Behältnisse durch diesen Zwischenraum geführt sind. Mit dieser in der Draufsicht Z-förmigen Struktur können die Behältnisse nunmehr "ineinander geschachtelt werden", derart, dass durch eine horizontale Schubbewegung der Verkaufs- und Transportbehälter eine raumsparende Packstellung erreicht ist. Dabei sind die Verbindungsstreben in ihrer Winkellage so ausgerichtet und fixiert, dass deren Abstandsmaß zueinander eine optimale Schachtelung und Minimierung des Platzbedarfs in der Packstellung ermöglicht.

Das Konzept mit der zumindest einen Verbindungsstrebe geht davon aus, diese jeweils im Nahbereich einer der Vertikalstreben mit der zugeordneten Stützstrebe der Längsseitenwand zu verbinden ist. Dabei ist vorgesehen, dass an dieser die Verbindungspunkte definierende Vertikalstrebe als die jeweils zugeordnete Querseitenwand entriegelbar anliegt. Daraus ergibt sich, dass die gegenüberliegenden Querseitenwände durch eine gegensinnige Klappbewegung in die Nichtgebrauchsstellung zu verlagern sind und eine an sich bekannte Lage einnehmen können.

Der in beliebigen Höhen in das System integrierbare Bodenteil des Gittertisches ist so konzipiert, dass dieser Bodenteil aus seiner Einbaulage oberhalb des Grundrahmens entnommen werden kann und erst danach die vorbeschriebene Klapp-Verlagerung der Querseitenwände möglich ist.

Ausgehend davon, dass in einfachster Ausführung der Grundrahmen mit der Verbindungsstrebe als eine verwindungssteife Einheit ausgeführt ist, sieht eine erfindungsgemäße Gestaltung des Grundrahmens vor, dass dessen Verbindungsstrebe in ihren Verbindungspunkten zur jeweiligen Stützstrebe mit einer gelenkigen Anbindung versehen ist. Damit kann erreicht werden, dass die einzelnen Verkaufs- und Transportbehälter in Richtung der Seitenwände zusammengeführt werden und in einer geschlossenen Parallellage dicht aneinander liegen können.

Für eine schubstabile Ausführung des Grundrahmens ist vorgesehen, dass die Verbindungsstrebe mittels eines Flanschteils weitgehend starr mit der jeweiligen Stützstrebe verbunden wird. Dabei kann die Verbindungsstrebe als ein weitgehend beliebig gestaltetes Profilteil ausgebildet sein, derart, dass Rohrprofilteile, Stangenprofilteile o. dgl. Elemente verwendet werden.

Eine Erweiterung des Konzeptes ist derart denkbar, dass an dem Grundrahmen mehrere, in ihrer diagonalen Ausrichtung insbesondere parallel verlaufende Verbindungsstreben vorgesehen sind. Auch dieses die Z-Kontur aufweisende System der Gitterbehälter kann dann ineinander geschoben werden.

Die Gestaltung der Verbindungsstrebe kann auch so ausgeführt sein, dass diese in Längsrichtung mehrteilig ausgebildet ist. Diese jeweiligen Einzelteile können in einer Montagestellung bzw. in der Gebrauchslage miteinander verspannt werden. Ebenso ist denkbar, die Verbindungsstrebe als ein teleskopisches Bauteil auszubilden. Zusätzlich zu der vorbeschriebenen Schwenkbarkeit der Verbindungsstrebe im Bereich der Verbindungspunkte kann die Z-Strebe auch an zumindest einer der Stützstreben lösbar gehalten sein. Damit kann erreicht werden, dass nur der jeweils gegenüberliegend zugeordnete unlösbare Verbindungspunkt vorteilhaft als ein Gelenk ausgebildet ist. Nach dem Lösen des einen der Verbindungspunkte kann dann die Verbindungsstrebe an die eine Hälfte des Systems herangeklappt werden, und die andere Hälfte wird ebenfalls abgestellt.

Bei sämtlichen der vorbeschriebenen Ausführungen ist vorgesehen, dass nach Entnahme des Bodenteils jeweils die Querseitenwände in die Klapplage zu der jeweiligen Längsseitenwand hin verlagert werden und damit ein horizontales Ineinanderschieben mehrerer der derart zusammengelegten Behälter in einer Packstellung möglich wird.

Dabei kann die Handhabung dieses Systems dadurch verbessert werden, dass zumindest der Grundrahmen mit die jeweilige Schubbewegung unterstützenden Rollrädern versehen wird. Ebenso ist denkbar, dass im Bereich der Verbindungsstrebe eines oder mehrere Rollräder vorgesehen ist/sind. Eine Stabilisierung des Systems in der Packstellung wird dadurch erreicht, dass die Rollräder zusätzlich auch eine Bremse aufweisen können.

Vorteilhaft weist die Z-förmige Stützstruktur des Grundrahmens im Bereich der Verbindungsstrebe zumindest ein Stützgelenk auf. Damit kann erreicht werden, dass die einzelnen Verkaufs- und Transportbehälter in Richtung der Seitenwände zusammengeführt werden und in einer geschlossenen Parallellage dicht aneinander liegen können.

Die konstruktive Gestaltung des vorbeschriebenen "Schwenksystems" sieht vor, dass die Verbindungsstrebe im Bereich zumindest eines der Stützgelenke mit einer Fixiervorrichtung versehen ist. Bei einer Ausführung mit doppeltem Gelenk kann im Bereich beider Enden der Verbindungsstreben jeweils eine Fixiervorrichtung vorgesehen sein. Dabei sieht die optimale Anordnung vor, dass die Fixiervorrichtung in Gebrauchsstellung zwischen der Verbindungsstrebe und dem jeweils nächstliegenden Längsverbinder des Grundrahmens wirksam ist. Die Fixiervorrichtung ihrerseits ist vorteilhaft mit einem am Längsverbinder des Grundrahmens gelenkig abgestützten Schwenkhebel versehen, der prinzipiell von Hand oder mittels Fuß bewegbar ist.

Dieser Schwenkhebel ist einerseits im Bereich eines Scharniers am Längsverbinder des Grundrahmens mittels einer Stützplatte gehalten, und andererseits weist der Schwenkhebel einen zur Verbindungsstrebe hin gerichteten Klemmansatz auf. Dieser Klemmansatz weist einen verlängerten Bedienhebel auf, so dass die Bedienung insbesondere durch eine Fußbewegung einfach möglich ist.

Die im Bereich der Z-förmigen Stützkontur des Grundrahmens vorgesehenen vier Stützräder sind so angeordnet, dass im Bereich der beiden längsrandseitigen Längsverbinder eine paarweise zusammenwirkende Stützrad-Kombination wirksam ist. Für eine einfache Bremsbedienung ist vorgesehen, dass die Stützräder jeweils paarweise bremsbar sind und dazu eine angepasste Bremsvorrichtung im Bereich des Grundrahmens abgestützt ist. Für die paarweise Bedienung der Stützräder weist die Bremsvorrichtung eine sich zwischen den beiden Stützrädern erstreckende Bedienstange auf, die in einer eine Schwenkachse definierenden Längsrichtung so konturiert ist, dass bei einer Fußbetätigung eine optimale Erreichbarkeit der Stangen-Kontur gewährleistet ist.

Diese Bedienstange wirkt bei Betätigung durch die dabei eingeleitete Schwenkbewegung auf die jeweilige an den Stützrädern vorgesehene Exzentereinheit an deren Bremse. Nach einer Betätigung der Bedienstange - im Bereich der einen Betätigungskontur - wird diese in eine Position verschwenkt, die für eine nachfolgende Rückverlagerung erschwert zugänglich ist. Deshalb ist vorgesehen, dass die Bedienstange in ihrer Längsrichtung die zwei jeweils beim Fixieren oder Lösen der Bremse optimal zu bedienenden und in Längsrichtung beabstandeten Betätigungskonturen aufweist. Diese jeweils nach Art eines bogenförmigen Fußhebels angeordneten Betätigungskonturen sind in Längsrichtung jeweils endseitig mit einem Führungsansatz versehen, der unmittelbar an einem exzentrischen Stellglied der an sich bekannten Rad-Bremse angreift.

Die konstruktive Gestaltung des vorbeschriebenen "Schwenksystems" sieht vor, dass die zumindest ein Stützgelenk aufweisende Verbindungsstrebe mit einer zweiten Ausführung der die gesicherte Packstellung definierenden Fixiervorrichtung versehen ist. Dabei ist die Fixiervorrichtung vorteilhaft mit zwei am Längsverbinder des Grundrahmens abgestützten Klemmschenkeln versehen, die die Verbindungsstrebe federelastisch erfassen.

Diese Klemmschenkel können andererseits im Bereich eines Tragarmes am Längsverbinder des Grundrahmens gehalten sein. Die jeweiligen Abmessungen der Klemmschenkel und/oder der jeweiligen Tragarme sind entsprechend der Größe des Verkaufsbehälters variabel auslegbar.

Bei der Handhabung dieses Systems werden die Seitenwände - mit den die jeweilige Schubbewegung unterstützenden Rollrädern - so parallel aufeinander zu bewegt, dass die Verbindungsstrebe von den paarweise zusammenwirkenden Klemmschenkeln erfasst wird. Eine Stabilisierung des Systems in der Packstellung wird dadurch erreicht, dass die beiden Fixiervorrichtungen gleichzeitig an der Verbindungsstrebe eine Klemmposition einnehmen. Beim Lösen des Systems kann die Klemmkraft der aus Federstahlplatten bestehenden Klemmschenkel durch Handbetätigung überwunden werden.

Weitere Einzelheiten und vorteilhafte Ausgestaltungen des erfindungsgemäßen Verkaufs- und Transportbehälters ergeben sich aus der nachfolgenden Beschreibung und der Zeichnung. In der Zeichnung zeigen:
- Fig. 1: eine perspektivische Ansicht des in Gebrauchslage befindlichen Verkaufs- und Transportbehälters mit einer Verbindungsstrebe im Bereich des Grundrahmens,
- Fig. 2: eine Perspektivdarstellung ähnlich Fig. 1 mit entnommenem Bodenteil und an die Längsseitenwände herangeklappten Querseitenwänden,
- Fig. 3: eine Draufsicht der Benutzungssituation gemäß Fig. 2,
- Fig. 4: eine Perspektivdarstellung der beiden in Fig. 3 ineinandergeschobenen Verkaufs- und Transportbehälter,
- Fig. 5: eine Perspektivdarstellung ähnlich Fig. 1 mit geändertem Bodenteil und geschlossenen Quer- und Längsseitenwänden,
- Fig. 6: eine Perspektivdarstellung ähnlich Fig. 5 mit nur das Rahmengestell verdeutlichenden Teilen,
- Fig. 7: eine vergrößerte Ausschnittsdarstellung im Bereich eines Stützgelenks der Verbindungsstrebe,
- Fig. 8: eine Perspektivdarstellung ähnlich Fig. 6 mit einer an der Verbindungsstrebe vorgesehenen Fixiervorrichtung in Öffnungsstellung,
- Fig. 9: eine Detaildarstellung im Bereich einer der Fixiervorrichtungen,
- Fig. 10 bis Fig. 12: jeweilige Darstellungen des Verkaufs- und Transportbehälters in zusammengeschobener Packlage,
- Fig. 13 bis Fig. 16: jeweilige Einzeldarstellungen im Bereich der mit den gebremsten Rollrädern zusammenwirkenden Fixiervorrichtung,
- Fig. 17: eine Perspektivdarstellung von zwei in Packstellung befindlichen Verkaufs- und Transportbehältern.
- Fig. 18: eine Perspektivdarstellung ähnlich Fig. 1 ohne eingelegtes Bodenteil und mit geschlossenen Quer- und Längsseitenwänden,
- Fig. 19: eine Draufsicht des Behälters gemäß Fig. 18,
- Fig. 20 und Fig. 21: jeweilige Verlagerungsphasen beim Zusammenschieben des Behälters gemäß Fig. 19,
- Fig. 22 und Fig. 23: jeweilige Perspektivdarstellungen des Systems gemäß Fig. 20 bzw. 21, und
- Fig. 24: eine Explosivdarstellung mit sämtlichen Einzelteilen des Systems.

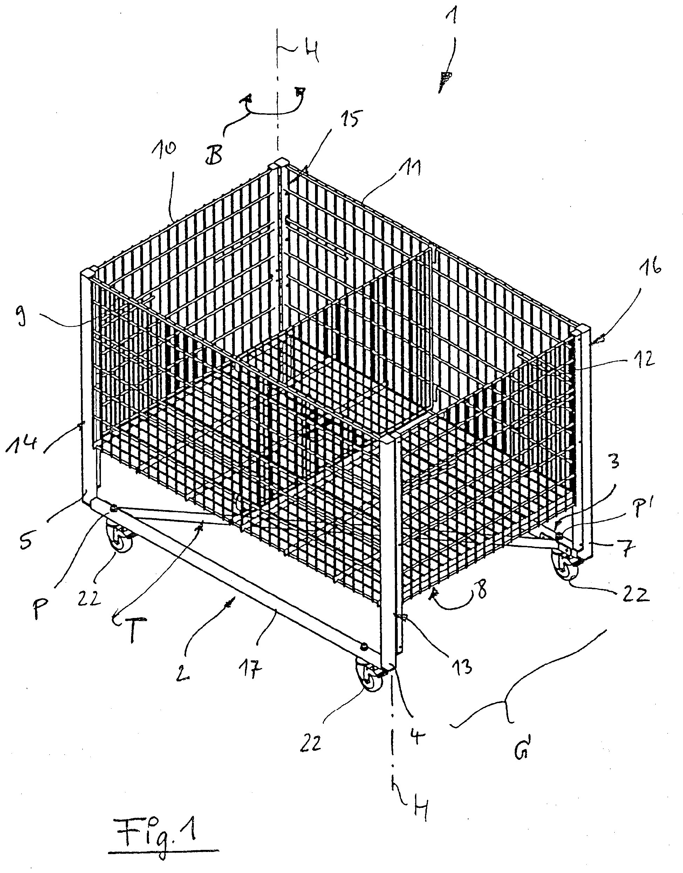

In Fig. 1 ist ein insgesamt mit 1 bezeichneter Verkaufs- und Transportbehälter dargestellt, der in Form eines zusammenlegbaren Gittertisches ausgeführt ist. Derartige Behälter 1 sind mit einem Grundrahmen G versehen, der aus jeweiligen Quer- oder Längsverbindern (z. B. Stützstreben 2, 3) besteht, dabei vier eckseitige Stützfüße 4, 5, 6, 7 aufweist und zumindest einen Bodenteil 8 untergreift. An diesem Grundrahmen G sind jeweilige Quer- und/oder Längsseitenwände 9, 10, 11, 12 mittels jeweiliger randseitiger Vertikalstreben 13, 14, 15, 16 schwenkbeweglich (Hochachse H) gehalten. In der dargestellten Ausführung sind die zumindest zwei gegenüberliegenden Querwände 10, 12 um die von der Vertikalstrebe 13 bzw. 15 definierte Hochachse H schwenkbar. Damit sind unterschiedliche Systeme herstellbar, bei denen bei Erreichen der Klapplage mehrere der Behältnisse 1, 1' in eine platzsparende Nichtgebrauchsstellung verbringbar sind.

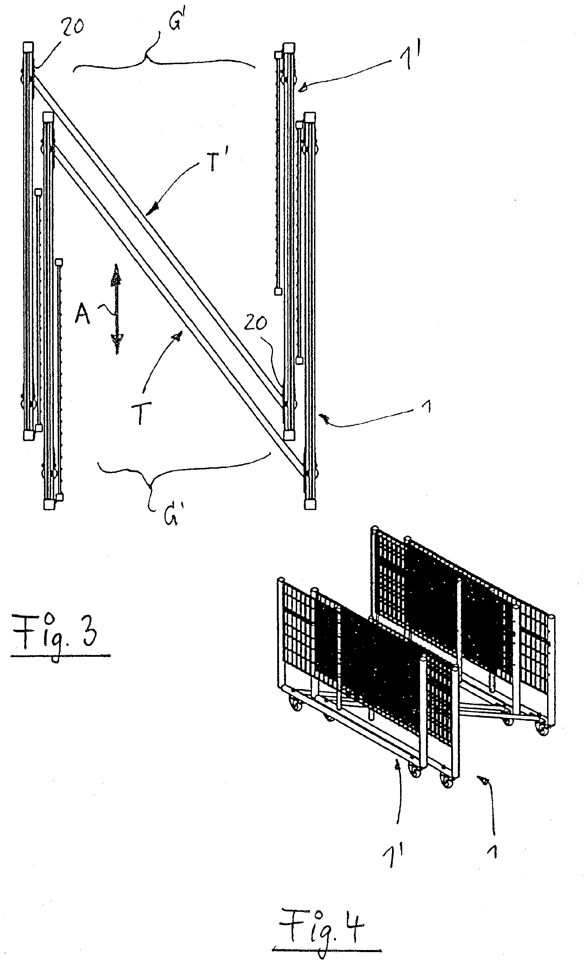

Das erfindungsgemäß verbesserte System sieht vor, dass der Grundrahmen G zwischen zwei paarweise im Bereich einer Seitenwand 9, 11 zusammenwirkenden Vertikalstreben 13, 14 bzw. 15, 16 jeweils eine ortsfeste Stützstrebe 2, 3 als Längsverbinder aufweist. Ausgehend von dieser Struktur ist vorgesehen, dass die den jeweiligen gegenüberliegenden Seitenwänden 9, 11 zugeordneten Stützstreben 2, 3 mit zumindest einer diagonalen Verbindungsstrebe T verbunden sind. Damit wird ein Grundrahmen G definiert, der in Draufsicht (Fig. 3) eine im Wesentlichen Z-förmige Stützstruktur aufweist. Diese mit wenigen Bauteilen realisierte Stützstruktur kann eine effektive Verbesserung für den Verkaufs- und Transportbehälter bewirken, derart, dass eine besonders platzsparende Positionierung mehrerer der Verkaufs- und Transportbehälter 1, 1' in einer Nichtgebrauchsstellung möglich wird (Fig. 4, Fig. 10, Fig. 20).

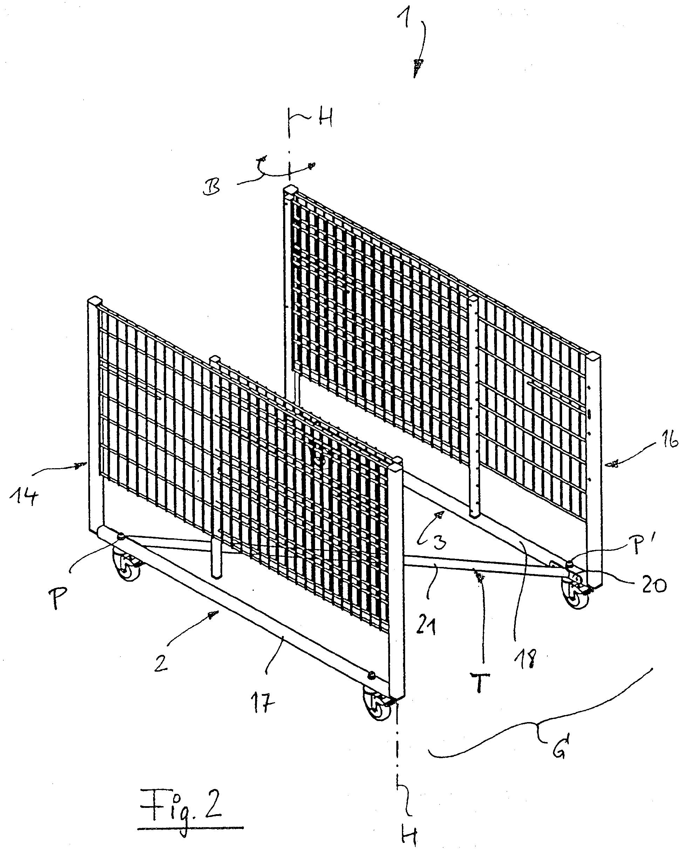

Das System sieht vor, dass die Verbindungsstrebe T, T' jeweils im Nahbereich einer der Vertikalstreben 14, 16 mit der als Profilteil ausgebildeten Stützstrebe 2, 3, 17, 18 verbunden ist und an diesen Vertikalstreben 14, 16 die jeweilige Querseitenwand 10, 12 entriegelbar anliegt und damit um die vorbeschriebene Hochachse H schwenkbar ist. Zur Durchführung dieser Schwenkbewegungen B ist vorgesehen, dass der zumindest eine Bodenteil 8 aus der Einbaulage oberhalb des Grundrahmens G entnehmbar ausgeführt ist (Fig. 2, Fig. 5, Fig. 24).

In bevorzugter Ausführung ist vorgesehen, dass die Verbindungsstrebe T, T' mittels eines Flanschteils 20 weitgehend starr mit der Stützstrebe 2 bzw. 3 verbunden wird. Bei einer Ausführung der Verbindungsstrebe T, T' als ein Rohrprofilteil, ein Stangenteil o. dgl. Tragprofil 21 ergibt sich damit, dass der Grundrahmen G eine weitgehend starre Z-Struktur bildet und an diesem die dargestellten Wand- und Strebenteile kippstabil gehalten sind.

Aus der Perspektivdarstellung in Fig. 2 wird deutlich, dass die Verbindungsstrebe T, T' in ihren Verbindungspunkten P, P' zur jeweiligen Stützstrebe 17, 18 hin auch gelenkig festgelegt werden kann.

Denkbar ist auch, dass an dem Grundrahmen G mehrere Verbindungsstreben T, T' angebracht werden, wobei diese insbesondere parallel in der diagonalen Ausrichtung fixiert sind. Die als einstückiges Bauteil dargestellte Verbindungsstrebe T in Form des Tragprofilteils 21 kann auch als eine in Längsrichtung mehrteilige Baugruppe ausgeführt sein (nicht dargestellt). Dabei kann auch eine Ausführung in Form einer Teleskopstange (ebenfalls nicht dargestellt) vorgesehen sein.

Für die Anbindung der Verbindungsstrebe T, T' im Bereich der jeweiligen Stützstrebe 2, 3 ist auch eine lösbare Verbindung denkbar. Damit könnte ggf. die Verbindungsstrebe T, T' vollständig aus der in Fig. 2 ersichtlichen Gebrauchsstellung gelöst werden. Ebenso ist denkbar, dass jeweils nur einer der Verbindungspunkte P, P' unlösbar ist und damit ein Gelenk definiert. Damit kann dieses System mit der lösbaren Verbindung für eine einfache Trennung der beiden gegenüberliegenden Klapp-Baugruppen genutzt werden. Die Verbindungsstrebe T, T' könnte dann in eine Nichtgebrauchsstellung an die jeweilige Seitenwand bzw. jeweilige Stützstrebe 2, 3 herangeschwenkt werden (nicht dargestellt).

Aus der Zusammenschau von Fig. 3 und Fig. 4 wird deutlich, dass nach Entnahme des Bodenteils 8 die Querseitenwände 10, 12 in die Klapplage zu der jeweiligen Längsseitenwand 9, 11 hin verlagert werden. Danach wird ein horizontales Ineinanderschiebe gemäß Pfeil A mehrerer der zusammengelegten Behälter 1, 1' möglich, so dass diese in einer gemäß Fig. 4 ersichtlichen Packstellung verwahrt werden können.

Für eine Erleichterung der Bedienbarkeit ist vorgesehen, dass zumindest der Grundrahmen G mit jeweiligen die Schubbewegung A unterstützenden Rollrädern 22 versehen sein kann. Ebenso ist denkbar, dass im Bereich der Verbindungsstrebe T, T' eines oder mehrere Rollräder vorgesehen ist/sind. Für eine effektive Fixierung in der Nichtgebrauchsstellung ist vorgesehen, dass die Rollräder 22 - oder zumindest eines von diesen - eine Bremse aufweisen kann.

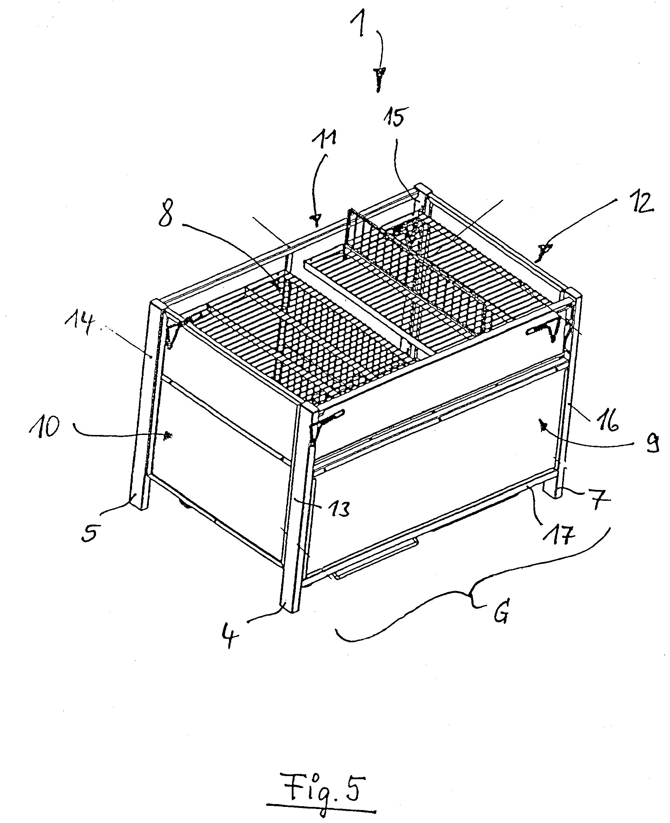

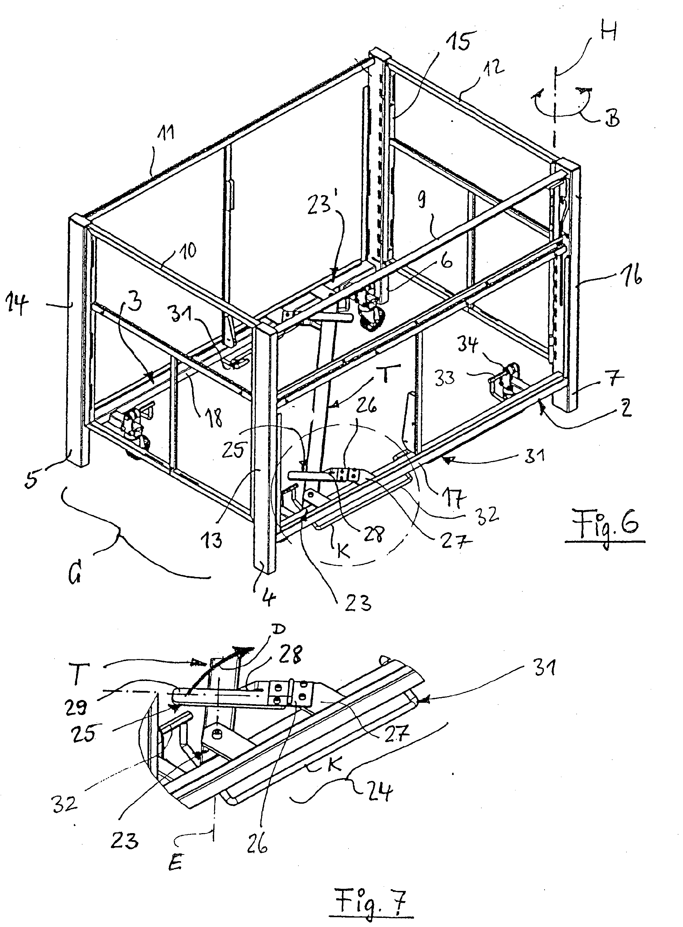

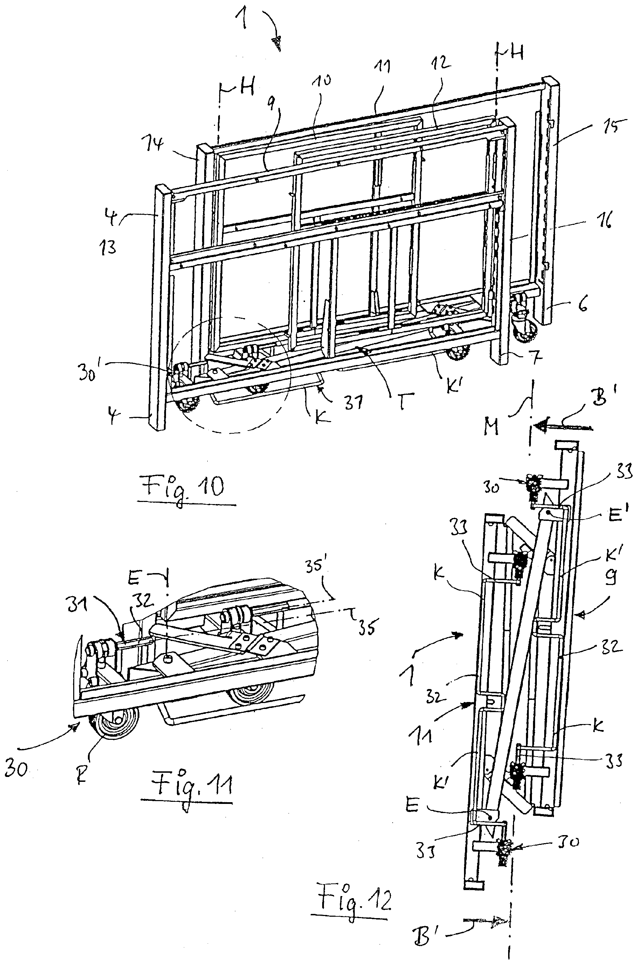

In Fig. 5 bis Fig. 17 ist eine zweite Ausführungsform des Verkaufs- und Transportbehälters 1 dargestellt, wobei dieser im Bereich des eine Z-förmige Stützstruktur des Grundrahmens G definierenden Verbindungsstrebe T mit zumindest einem Stützgelenk 23, 23' versehen ist (Fig. 6). Ausgehend von der "starren" Abstützung der Verbindungsstrebe T - gemäß Fig. 1 bzw. Fig. 6 - ist bei diesem erweiterten Konzept mit "gelenkiger" Verbindungsstrebe T vorgesehen, dass mittels des zumindest einen Stützgelenkes 23, 23' auch im Bereich zumindest einer der beiden Seitenwände 9, 11 eine Verstellung möglich ist. In Fig. 12 ist diese Schub-Verstellung mit jeweiligen Pfeilen B' angedeutet, wobei die Verlagerung der gegenüberliegenden Seitenwände 9, 11 relativ zu einer Längsmittelebene M deutlich wird.

Für eine optimale Handhabung des Systems ist vorgesehen, dass im Bereich der beiden Enden der Verbindungsstrebe T zumindest jeweils ein Stützgelenk 23 und 23' vorgesehen ist, so dass die vorbeschriebene Verlagerung mit geringem Aufwand und auch für wenig geübte Nutzer einfach durchführbar ist. Dabei wird deutlich, dass die Stützgelenke 23, 23' für ein im Wesentlichen horizontales Zusammenschieben (Pfeil B') der beiden Längsseitenwände 9, 11 vorgesehen sind, wobei die Verbindungsstrebe T zwischen den beiden bodenseitigen Längsverbindern 17 und 18 verlagert wird und unterhalb der beiden verschwenkten Querseitenwände 9, 11 positioniert ist.

Für eine optimale Bedienung dieser gelenkigen Verbindungseinheit am Grundrahmen G ist die Verbindungsstrebe T im Bereich zumindest eines der Stützgelenke 23, 23' mit einer Fixiervorrichtung 24, 24' versehen. Für eine einfache Handhabung - von beiden Seiten des Behälters aus - ist vorgesehen, dass im Bereich beider Enden der Verbindungsstrebe T jeweils eine der Fixiervorrichtungen 24 und 24' vorgesehen ist. Damit hat der insbesondere von einer Seite an den Behälter 1 herantretende Nutzer die Möglichkeit, jeweils wahlweise eine oder beide Fixiervorrichtungen 23, 23' zu bedienen bzw. zum Stabilisieren einzusetzen und zu lösen. Dabei zeigt die Zusammenschau von Fig. 6 bis Fig. 8 die optimale Position der Fixiervorrichtung 24, 24', die in Gebrauchsstellung zwischen der Verbindungsstrebe T und dem jeweils nächstliegenden Längsverbinder 17 bzw. 18 wirksam ist.

Aus der Detaildarstellung gemäß Fig. 7 wird deutlich, dass die Fixiervorrichtung 24, 24' mit einem am zugeordneten Längsverbinder 17 bzw. 18 gelenkig abgestützten Schwenkhebel 25 versehen ist. Der Schwenkhebel 25 ist seinerseits im Bereich eines Scharniers 26 am Längsverbinder 17 bzw. 18 mittels einer Stützplatte 27 gehalten. Andererseits weist der Schwenkhebel 25 einen zur Verbindungsstrebe T gerichteten Klemmansatz 28 auf.

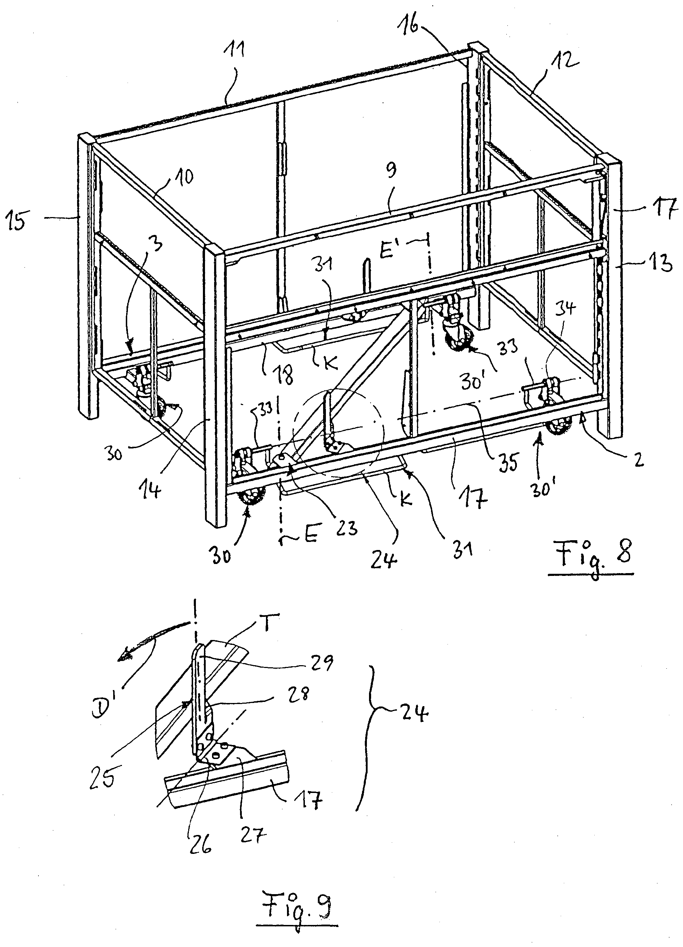

Aus der Zusammenschau von Fig. 7 (Klemmstellung) und Fig. 9 (Öffnungsstellung) wird deutlich, dass der Klemmansatz 28 mittels eines verlängerten Bedienschenkels 29 von Hand oder Fuß bedienbar ist. Mit jeweiligen Pfeilen D, D' ist dabei die Öffnungsrichtung (Fig. 7) bzw. die Schließrichtung (Fig. 9) des Schwenkhebels 25 veranschaulicht. In der Öffnungsstellung gemäß Fig. 8 und Fig. 9 sind die beiden Schwenkachsen E, E' der Stützgelenke 23, 23' nach dem Lösen (Pfeil D) der Fixiervorrichtungen 24, 24' freigegeben, so dass danach der Verkaufs- und Transportbehälter 1 zusammengeschoben und in die aus Fig. 10 bis Fig. 12 ersichtliche Packstellung verlagert werden kann.

Zur verbesserten Handhabung des Systems ist vorgesehen, dass im Bereich der Z-förmigen Stützkontur des Grundrahmens G in den jeweiligen Eckbereichen je ein Stützrad 30 angeordnet ist. Diese Stützräder 30 sind einander so zugeordnet, dass ein paarweises Zusammenwirken erreicht ist und für zusätzliche Baugruppen eine Bedienlage vorgegeben wird. Vorteilhaft sind im Bereich der längsrandseitigen Längsverbinder 17, 18 jeweils zwei zusammenwirkende Stützräder 30, 30' vorgesehen. Diese Anordnung wurde gewählt, um für die Stützräder-Paare 30, 30' jeweils mit geringem Aufwand eine paarweise bremsbare Kombination zu erreichen.

Mit diesen beiden Bremsanlagen des Systems wird im Seitenbereich des Verkaufs- und Transportbehälters 1 ein "beidseitiges" Bremssystem definiert, wobei die beiden Paare der Stützräder 30, 30' eine einfache Bedienung gewährleisten, da am Behälter 1 - auch in einer Bedienstellung an einer Wand - zumindest von einer Seite aus die Brems- bzw. Löse-Bedienung realisiert werden kann.

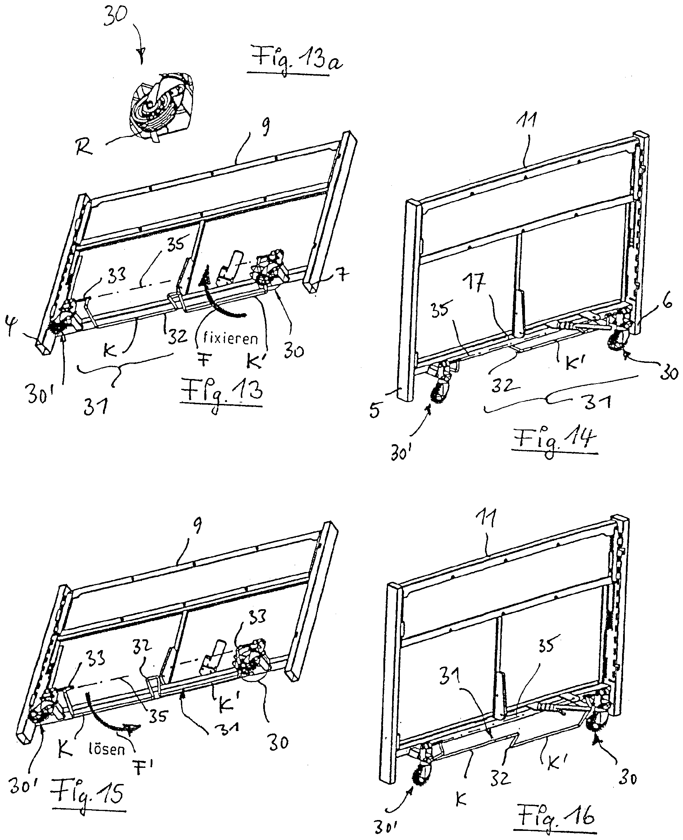

Für diese Bedienung sind die paarweise zusammenwirkenden Stützräder 30, 30' über jeweils eine Bremsvorrichtung 31 verbunden. Aus der Zusammenschau der Darstellungen gemäß Fig. 13 bis Fig. 16 wird die prinzipielle Funktion dieser Bremsvorrichtung 31 deutlich. In vorteilhafter Ausführung ist vorgesehen, dass die Stützräder 30, 30' als handelsüblich gebremste Zubehörteile ausgebildet sind, wobei an diesen Stützrädern 30, 30' ein von außen zugängliches Stellglied 34 (Fig. 6) im Bereich eines auf das Rad R wirkenden Bremselementes (nicht dargestellt) vorhanden ist.

In Anpassung an dieses Doppel-Rad-System weist die Bremsvorrichtung 31 eine sich jeweils zwischen den beiden Stützrädern 30, 30' erstreckende und um eine Stellachse 35 (Fig. 8) schwenkbare Bedienstange 32 auf. Diese ist in Längsrichtung mit zumindest zwei Betätigungskonturen K, K' versehen. Diese Betätigungskonturen K, K' sind in optimal abgedeckter und den Schwenkbereich der Querseitenwände 10, 12 nicht beeinflussender Lage im Nahbereich der jeweiligen Längsverbinder 17 bzw. 18 so angeordnet, dass für das Lösen und Fixieren wechselweise jeweils eine Kontur K bzw. K' zu betätigen ist.

In Fig. 13 wird mit einem Pfeil F die - insbesondere mittels eines Fußes vom Nutzer ausführbare - Betätigung beim Fixieren im Bereich der Kontur K' veranschaulicht. In Fig. 15 ist die umgekehrte Bewegungsfolge durch einen Pfeil F' dargestellt, wobei die Kontur K zum Lösen des Systems (Fig. 16) genutzt wird. Bei diesem System wird die jeweilige Betätigungskontur K, K' effizient als Fußhebel genutzt, wobei jeweilige endseitige Führungsansätze 33, 33' am Stellglied 34 der Bremse 30, 30' angreifen.

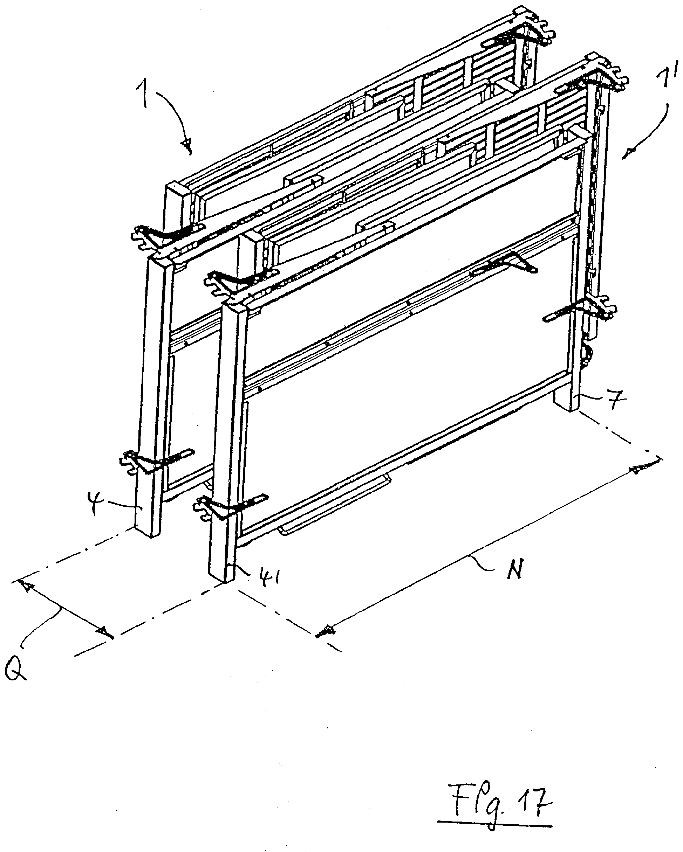

Ausgehend von der kompakt zusammengeschobenen Nichtgebrauchsstellung des Behälters 1 in Fig. 12 ist dessen Zusammenwirken mit zumindest einem zweiten Behälter 1' in Fig. 17 verdeutlicht. Mit jeweiligen Maßpfeilen N und Q sind die Länge und die Breite in der vorteilhaft kompakten Packstellung angegeben, so dass die mit dem erfindungsgemäßen System erreichbare raumsparende Lage von Behältern - 1, 1' deutlich wird. Dabei können die Behälter 1, 1' weitgehend frei stehend gelagert werden, da im Bereich der benachbarten Stützfüße 4, 4' und 7, 7' ein optimaler Stützabstand Q mit hinreichender Auflagefläche gebildet ist und zusätzliche Sicherungselemente entbehrlich sind.

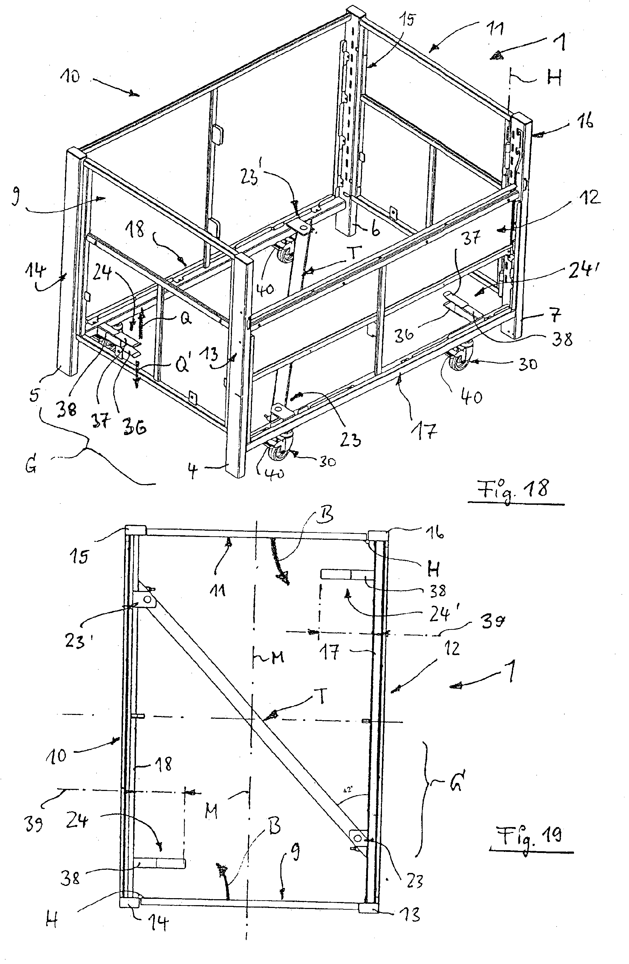

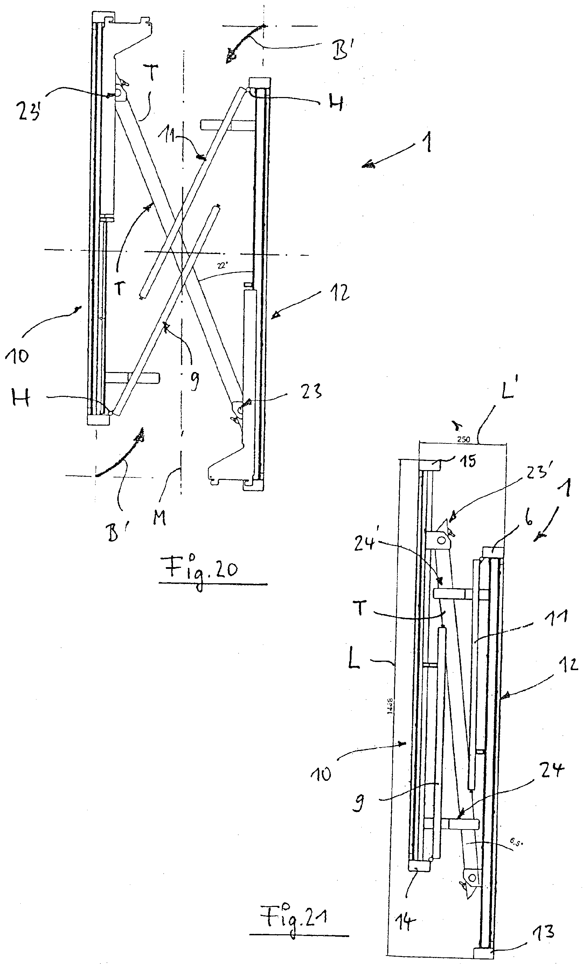

In Fig. 18 bis Fig. 24 ist eine Ausführungsform des Verkaufs- und Transportbehälters 1 dargestellt, bei der im Bereich der eine Z-förmige Stützstruktur des Grundrahmens G definierenden Verbindungsstrebe T zwei Stützgelenke 23, 23' vorgesehen sind (Fig. 18). Ausgehend von der "starren" Abstützung der Verbindungsstrebe T - gemäß Fig. 1 - ist bei diesem erweiterten Konzept mit "gelenkiger" Verbindungsstrebe T vorgesehen, dass mittels des zumindest einen Stützgelenkes 23, 23' auch im Bereich zumindest einer der beiden Seitenwände 10, 12 eine Verstellung möglich ist. Ausgehend von Fig. 19 ist in Fig. 20 diese Schub-Verstellung mit jeweiligen Pfeilen B' angedeutet, wobei die Verlagerung der gegenüberliegenden Seitenwände 10, 12 relativ zu einer Längsmittelebene M deutlich wird.

Für eine optimale Bedienung dieser gelenkigen Verbindungseinheit am Grundrahmen G und eine Fixierung in der Packstellung ist die Verbindungsstrebe T im Bereich zumindest eines der Stützgelenke 23, 23' mit einer Fixiervorrichtung 24, 24' (Fig. 21) versehen. Für eine einfache Handhabung - von beiden Seiten des Behälters aus - ist vorgesehen, dass im Bereich beider Enden der Verbindungsstrebe T jeweils eine der Fixiervorrichtungen 24 und 24' vorgesehen ist. Damit hat der insbesondere von einer Seite an den Behälter 1 herantretende Nutzer die Möglichkeit, jeweils wahlweise eine oder beide Fixiervorrichtungen 23, 23' zu bedienen bzw. zum Stabilisieren einzusetzen und zu lösen.

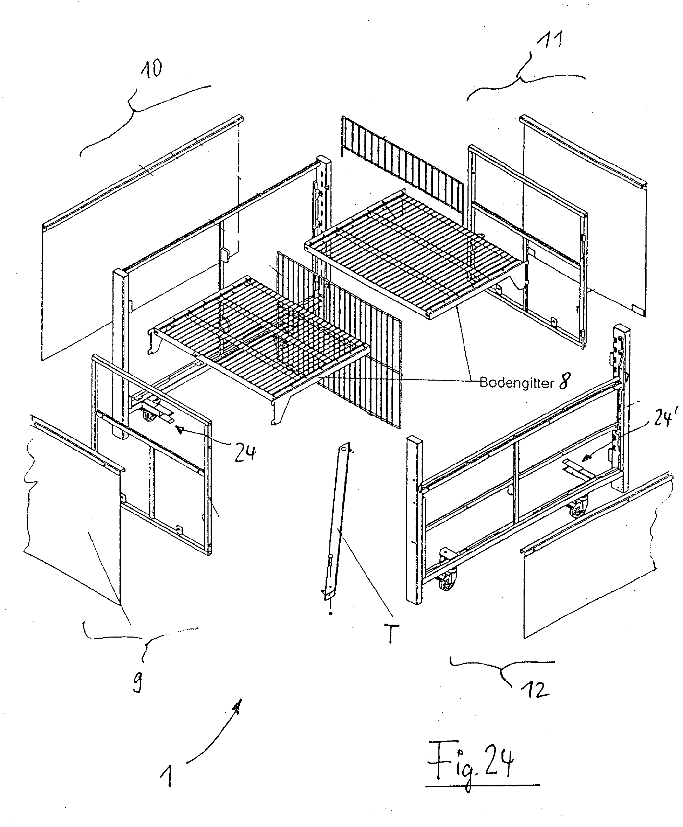

Aus einer Zusammenschau unterschiedlicher Bedienstellungen des Behälters 1 gemäß Fig. 19 bis Fig. 23 wird deutlich, dass ausgehend von der Nutzstellung gemäß Fig. 19 die in das System integrierten Bodengitter 8 (Fig. 24) entnommen werden und danach die Querseitenwände 9, 11 im Bereich ihrer Hochachsen H zu den Längsseitenwänden 10, 12 geschwenkt werden (Pfeil B).

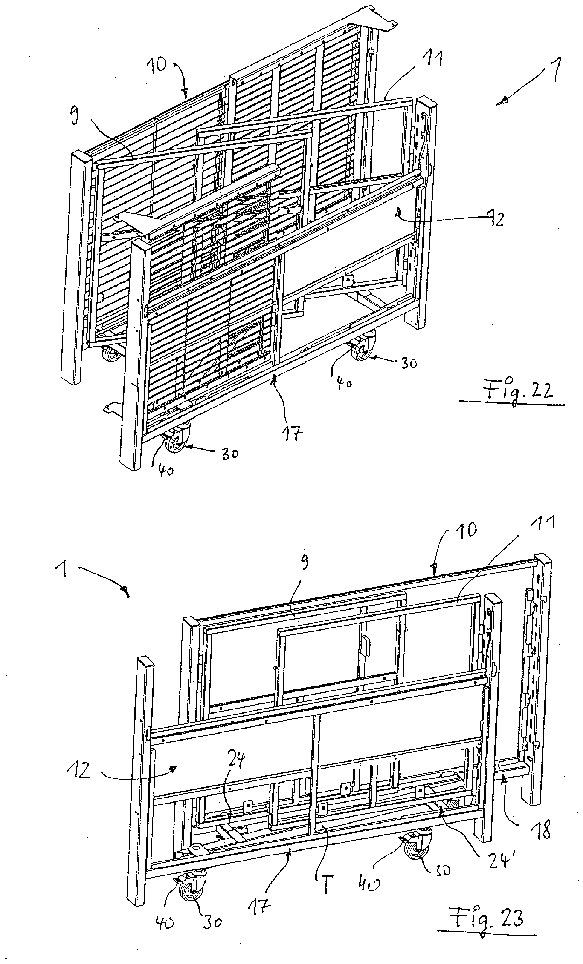

Danach erfolgt eine weitere Schwenk-Schub-Verlagerung (Pfeil B', Fig. 20) des Systems, derart, dass die Seitenwände 10, 12 in Richtung der Längsmittelebene M horizontal aufeinander zu bewegt werden. Diese Verlagerung wird so lange fortgesetzt, bis die im Bereich der Stützgelenke 23, 23' schwenkbare Verbindungsstrebe T von den jeweiligen Fixiervorrichtungen 24, 24' (Fig. 21) erfasst wird und in dieser Lage ein fixierte Packstellung des Behälters 1 erreicht wird. Dabei wird deutlich, dass in dieser Packstellung nur noch eine durch die Länge L und L' definierte, vergleichsweise geringe Stellfläche erforderlich ist (Packstellung gemäß Fig. 21, 23).

Aus einer Zusammenschau von Fig. 18 mit Fig. 22 und Fig. 23 wird deutlich, dass beim horizontalen Zusammenschieben der beiden Längsseitenwände 10, 12 die mitbewegte Verbindungsstrebe T zwischen den beiden Längsverbindern 17, 18 verlagert wird und bei Erreichen der Packstellung (Fig. 21) die Verbindungsstrebe T zwischen zwei Klemmschenkeln 36, 37 der Fixiervorrichtungen 24, 24' "elastisch" erfasst wird. Dabei sind die die Verbindungsstrebe T aufnehmenden Klemmschenkel 36, 37 an einem anderenends mit dem Längsverbinder 17, 18 verbundenen Tragarm 38 gehalten.

Aus der Draufsicht gemäß Fig. 19 wird deutlich, dass die an beiden Endbereichen der Verbindungsstrebe T angreifenden Fixiervorrichtungen 24, 24' mit im Wesentlichen gleichen Abmessungen (Abstandsmaß 39) versehen sind, wobei dieses im Wesentlichen durch die Länge der Tragarme 38 bestimmte Maß variabel an die jeweilige konstruktive Ausführung des Systems anpassbar ist.

In vorteilhafter Ausführung sind die beiden Klemmschenkel 36 und 37 als Federplatten ausgebildet, so dass diese bei Einführung der Verbindungsstrebe T (Fig. 21) aufspreizbar sind (Pfeil Q, Q', Fig. 18). Damit wird gleichzeitig eine die Fixierung bewirkende Haltekraft erzeugt. Durch insbesondere eine Handverlagerung der erfassten Seitenwände 10, 12 - bei der Rückverlagerung des Systems in die Gebrauchsstellung - kann die Haltekraft vom Bediener einfach überwunden werden. Denkbar ist auch, im Bereich der Tragarme 38 jeweilige Rückstellhilfen in Form von Druckfedern o. dgl. Stellorganen vorzusehen. Auch Sicherungsteile in Form von Clips, Steckstiften o. dgl. mechanische Halter sind denkbar, in den Zeichnungen jedoch nicht dargestellt.

Zur optimalen Fixierung des Systems in der Gebrauchslage (Fig. 18) bzw. der Packstellung (Fig. 23) werden Fixiervorrichtungen im Bereich der jeweiligen Stützräder 30 genutzt, wobei hier eine unmittelbare Bremsung mittels eines Bremsgliedes 40 vorgesehen ist.

In Fig. 24 zeigt eine Explosivdarstellung den Gesamtaufbau des erfindungsgemäßen Verkaufs- und Transportbehälters 1, wobei die einzelnen Komponenten in einer Übersichtsdarstellung deutlich, jedoch nicht nochmals einzeln beschrieben werden.

## Patentansprüche

1. Zusammenlegbarer Verkaufs- und Transportbehälter (1), mit einem aus Querstangen oder Längsverbindern (2, 3) bestehenden, vier eckseitige Stützfüße (4, 5, 6, 7) aufweisenden und zumindest einen Bodenteil (8) untergreifenden Grundrahmen (G), an dem jeweilige Quer- und/oder Längsseitenwände (9, 10, 11, 12) mittels jeweiliger randseitiger Vertikalstreben (13, 14, 15, 16) schwenkbeweglich gehalten sind, derart, dass zumindest zwei der gegenüberliegenden Wände (10, 12) um eine von der jeweiligen Vertikalstrebe (13, 15) definierten Hochachse (H) schwenkbar und in einer dabei erreichten Klapplage mehrere der Behältnisse (1, 1') in eine platzsparende Nichtgebrauchsstellung bringbar sind, wobei der Grundrahmen (G) zwischen zwei paarweise im Bereich einer Seitenwand (9, 11) zusammenwirkenden Vertikalstreben (13, 14 bzw. 15, 16) jeweils eine ortsfeste Stützstrebe (17, 18) als Längsverbinder aufweist und diese beiden gegenüberliegenden Seitenwände (9, 11) im Bereich der beiden Stützstreben (17, 18) mit zumindest einer diagonalen Verbindungsstrebe (T, T') verbunden sind, derart, dass eine Z-förmige Stützstruktur des Grundrahmens (G) definiert ist, **dadurch gekennzeichnet, dass** die Verbindungsstrebe (T, T') in ihren Verbindungspunkten (P, P') zur jeweiligen Stützstrebe (17, 18) gelenkig festlegbar ist.

2. Verkaufs- und Transportbehälter nach Anspruch 1, **dadurch gekennzeichnet, dass** an dem Grundrahmen (G) mehrere parallele Verbindungsstreben (T, T') vorgesehen sind.

3. Verkaufs- und Transportbehälter nach Anspruch 1 oder 2, **dadurch gekennzeichnet, dass** die Verbindungsstrebe (T, T') in ihrer Längsrichtung mehrteilig ausgebildet ist, wobei die Teile gelenkig und/oder teleskopisch verbunden sind.

4. Verkaufs- und Transportbehälter nach einem der Ansprüche 1 bis 3, **dadurch gekennzeichnet, dass** die Verbindungsstrebe (T, T') an zumindest einer der Stützstreben (17, 18) lösbar gehalten ist und der jeweils unlösbare Verbindungspunkt (P, P') der Verbindungsstrebe (T) als ein Gelenk ausgebildet ist.

5. Verkaufs- und Transportbehälter nach einem der Ansprüche 1 bis 4, **dadurch gekennzeichnet, dass** die Z-förmige Stützstruktur des Grundrahmens (G, G') im Bereich der Verbindungsstrebe (T, T') zumindest ein für ein Verstellen zumindest einer der Seitenwände (9, 11) vorgesehenes Stützgelenk (23, 23') aufweist.

6. Verkaufs- und Transportbehälter nach einem der Ansprüche 1 bis 5, **dadurch gekennzeichnet, dass** im Bereich der beiden Enden der Verbindungsstrebe (T) zumindest jeweils ein Stützgelenk (23, 23') vorgesehen ist.

7. Verkaufs- und Transportbehälter nach Anspruch 5 oder 6, **dadurch gekennzeichnet, dass** die Stützgelenke (23, 23') für ein im Wesentlichen horizontales Zusammenschieben der beiden Längsseitenwände (9, 11) vorgesehen sind und dabei die Verbindungsstrebe (T) zwischen den beiden Längsverbindern (17, 18) verlagerbar ist.

8. Verkaufs- und Transportbehälter nach einem der Ansprüche 5 bis 7, **dadurch gekennzeichnet, dass** die Verbindungsstrebe (T) im Bereich zumindest eines der Stützgelenke (23, 23') mit einer Fixiervorrichtung (24, 24') versehen ist.

9. Verkaufs- und Transportbehälter nach einem der Ansprüche 5 bis 8, **dadurch gekennzeichnet, dass** im Bereich beider Enden der Verbindungsstrebe (T) jeweils eine Fixiervorrichtung (24, 24') vorgesehen ist und dabei die Fixiervorrichtung (24, 24') in Gebrauchsstellung zwischen der Verbindungsstrebe (T) und dem jeweils nächstliegenden Längsverbinder (17, 18) wirksam ist.

10. Verkaufs- und Transportbehälter nach einem der Ansprüche 5 bis 9, **dadurch gekennzeichnet, dass** die Fixiervorrichtung (24, 24') mit einem am Längsverbinder (17, 18) gelenkig abgestützten Schwenkhebel (25) versehen ist, dieser Schwenkhebel (25) einerseits im Bereich eines Scharniers (26) am Längsverbinder (17 bzw. 18) mittels einer Stützplatte (27) gehalten ist und andererseits einen zur Verbindungsstrebe (T) gerichteten Klemmansatz (28) aufweist, wobei dieser mittels eines Bedienschenkels (29) von Hand oder Fuß bedienbar ist.

11. Verkaufs- und Transportbehälter nach einem der Ansprüche 5 bis 10, **dadurch gekennzeichnet, dass** der Grundrahmen (G) im Bereich der Z-förmigen Stützkontur vier Stützräder (30) aufweist, wobei im Bereich der längsrandseitigen Längsverbinder (17, 18) jeweils zwei zusammenwirkende Stützräder (30, 30') vorgesehen sind und die Stützräder (30, 30') paarweise bremsbar sind, derart, dass die Stützräder (30, 30') paarweise über eine Bremsvorrichtung (31) verbunden sind.

12. Verkaufs- und Transportbehälter nach Anspruch 11, **dadurch gekennzeichnet, dass** die Bremsvorrichtung (31) eine sich zwischen den beiden Stützrädern (30, 30') erstreckende Bedienstange (32) aufweist, die in ihrer Längsrichtung mit zwei beim Fixieren (F) oder Lösen (F') der Bremsen (30, 30') zu bedienenden Betätigungskonturen (K, K') versehen ist, diese beiden Betätigungskonturen (K, K') als jeweilige Fußhebel wirksam sind und mit einem endseitigen Führungsansatz (33, 33') am Stellglied (34) der jeweiligen Bremse (30, 30') angreifen.

13. Verkaufs- und Transportbehälter nach einem der Ansprüche 5 bis 12, **dadurch gekennzeichnet, dass** die mit zumindest einem Stützgelenk (23, 23') versehene Verbindungsstrebe (T) relativ zu einer der im Bereich der Längsverbinder (17, 18) vorgesehenen Fixiervorrichtung(en) (24, 24') verlagerbar ist.

14. Verkaufs- und Transportbehälter nach einem der Ansprüche 5 bis 13, **dadurch gekennzeichnet, dass** im Bereich beider Enden der Verbindungsstrebe (T) zumindest das jeweils eine Stützgelenk (23, 23') vorgesehen ist und im Abstand zu diesen Stützgelenken (23, 23') jeweils eine Fixiervorrichtung (24, 24') an den Längsverbindern (17, 18) gehalten ist.

15. Verkaufs- und Transportbehälter nach einem der Ansprüche 5 bis 14, **dadurch gekennzeichnet, dass** die Querseitenwände (9, 11) zu den jeweiligen Längsseitenwänden (10, 12) hin schwenkbar sind und danach die Stützgelenke (23, 23') für ein Verstellen der Seitenwände (10, 12) einsetzbar sind, derart, dass die Seitenwände (10, 12) horizontal aufeinander zu bewegt werden, dabei die mitschwenkbare Verbindungsstrebe (T) von der jeweiligen Fixiervorrichtung (24, 24') erfassbar ist und damit die Packstellung des Behälters (1) fixierbar ist.

16. Verkaufs- und Transportbehälter nach einem der Ansprüche 5 bis 15, **dadurch gekennzeichnet, dass** beim horizontalen Zusammenschieben der beiden Längsseitenwände (10, 12) die mitbewegte Verbindungsstrebe (T) zwischen den beiden Längsverbindern (17, 18) verlagerbar und im Bereich der Fixiervorrichtung(en) (24, 24') zwischen zwei Klemmschenkeln (36, 37) fixierbar ist.

17. Verkaufs- und Transportbehälter nach einem der Ansprüche 5 bis 16, **dadurch gekennzeichnet, dass** die die Verbindungsstrebe (T) aufnehmenden Klemmschenkel (36, 37) der Fixiervorrichtung (24, 24') an einem anderenends mit dem Längsverbinder (17, 18) verbundenen Tragarm (38) gehalten sind, wobei die an beiden Endbereichen der Verbindungsstrebe (T) angreifenden Fixiervorrichtungen (24, 24') im Wesentlichen gleiche Abmessungen (Maß 39) im Bereich der Tragarme (38) aufweisen.

18. Verkaufs- und Transportbehälter nach Anspruch 17, **dadurch gekennzeichnet, dass** die beiden Klemmschenkel (36, 37) als spreizbare Federplatten (Pfeil Q, Q') ausgebildet sind, deren Haltekraft durch eine Handverlagerung der erfassten Seitenwände (10, 12) überwindbar ist.

19. Verkaufs- und Transportbehälter nach einem der Ansprüche 1 bis 18, **dadurch gekennzeichnet, dass** die Verbindungsstrebe (T, T') als ein Rohrprofilteil, ein Stangenteil o. dgl. Tragprofil (21) ausgebildet ist.

## Claims

1. Collapsiblecontainer (1) for sales and transport,comprising a base frame (G) that consists of transverse rods or longitudinal connectors (2, 3), hasfour corner supporting feet (4, 5, 6, 7) and engages under at least one base part (8),on which base frame transverse and/or longitudinal side walls (9, 10, 11, 12) are pivotably held by means of respective edge-side vertical struts (13, 14, 15, 16)such that at least two of the opposing walls (10, 12) can be pivoted about a vertical axis (H) defined by the respective vertical strut (13, 15), and, in a collapsed position thus achieved, a plurality of the containers(1, 1') can be moved into a space-saving non-use position,
the base frame (G) comprisingin each case,between two vertical struts (13, 14 or 15, 16) that interact in pairs in the region of a side wall (9, 11),a stationary support strut (17, 18)as a longitudinal connector, and said two opposing side walls (9, 11) being connected to at least one diagonal connecting strut (T, T') in the region of the two support struts (17, 18)such that a Z-shaped support structure of the base frame (G) is defined,
**characterised in that** the connecting strut (T, T') can be hingedlyfixed at the connection points (P, P') thereof to a support strut(17, 18) in each case.

2. Container for sales and transport according to claim 1, **characterised in that** a plurality of parallel connecting struts (T, T') are provided on the base frame (G).

3. Container for sales and transport according to either claim 1 or claim 2, **characterised in that** the connecting strut (T, T') is made up of multiple parts in the longitudinal direction thereof, the parts beinghingedly and/or telescopically connected.

4. Container for sales and transport according to any of claims 1 to 3,**characterised in that** the connecting strut (T, T') is detachably held on at least one of the support struts (17, 18), and each non-detachable connection point (P, P') of the connector strut (T) is designed as a joint.

5. Container for sales and transport according to any of claims 1 to 4, **characterised in that** the Z-shaped support structure of the base frame (G, G') comprises, in the region of the connecting strut (T, T'), at least one support joint (23, 23') provided for moving at least one of the side walls (9, 11).

6. Container for sales and transport according to any of claims 1 to 5, **characterised in that** at least one support joint (23, 23') is provided in each case in the region of the two ends of the connector strut (T).

7. Container for sales and transport according to either claim 5 or claim 6, **characterised in that** the support joints (23, 23') are provided so that the two longitudinal side walls (9, 11) can be pushed together substantially horizontally, and the connecting strut (T) can be moved between the two longitudinal connectors (17, 18) in the process.

8. Container for sales and transport according to any of claims 5 to 7, **characterised in that** the connecting strut (T) is provided with a fixing device (24, 24') in the region of at least one of the support joints (23, 23').

9. Container for sales and transport according to any of claims 5 to 8, **characterised in that** a fixing device (24, 24') is provided in each case in the region of the two ends of the connecting strut (T), and the fixing device (24, 24') acts in the use position between the connector strut (T) and the longitudinal connector (17, 18) that isclosestin each case.

10. Container for sales and transport according to any of claims 5 to 9, **characterised in that** the fixing device (24, 24') is provided with a pivoting lever (25) that is hingedlybraced on the longitudinal connector (17, 18), and said pivoting lever (25) is held on the longitudinal connector (17 or 18) in the region of a hinge (26) by means of a support plate (27) and comprisesa clamping attachment (28) that is oriented towards the connector strut (T), said clampingattachmentbeing operable,by hand or foot, by means of an operating arm (29).

11. Container for sales and transport according to any of claims 5 to 10, **characterised in that** the base frame (G) comprises four support wheels (30) in the region of the Z-shaped support contour, two interacting support wheels (30, 30') being providedin each case in the region of the longitudinal edge-side longitudinal connector (17, 18), and it being possible for the support wheels (30, 30') to be braked in pairs such that the support wheels (30, 30') are connected in pairs by means of a braking device (31).

12. Container for sales and transport according to claim 11, **characterised in that** the braking device (31) comprises an operating rod (32) that extends between the two support wheels (30, 30') and is provided in its longitudinal direction with two actuating contours (K, K') which are be operated when the brakes (30, 30') are fixed (F) or released (F'), said two actuating contours (K, K') acting as pedals in each case and engaging in an end-side guide attachment (33, 33') on the actuator (34) of the respective brake (30, 30').

13. Container for sales and transport according to any of claims 5 to 12, **characterised in that** the connecting strut (T) that is provided with at least one support joint (23, 23') can be moved relative to one of the fixing devices (24, 24') provided in the region of the longitudinal connectors (17, 18).

14. Container for sales and transport according to any of claims 5 to 13, characterised in thatat least one support joint (23, 23') is provided in the region of the two ends of the connecting strut (T), and a fixing device (24, 24') is held in each case on the longitudinal connectors (17, 18) so as to be spaced from said support joints (23, 23').

15. Container for sales and transport according to any of claims 5 to 14, **characterised in that** the transverse side walls (9, 11) can be pivoted towards the respective longitudinal side walls (10, 12), and the support joints (23, 23') can then be used for moving the side walls (10, 12) such that the side walls (10, 12) are moved horizontally towards one another, it being possible, in so doing, for the connector strut (T) that can pivot together with the wallsto be gripped by the fixing device (24, 24') in each case, and thus the packed position of the container (1) can be fixed.

16. Container for sales and transport according to any of claims 5 to 15, **characterised in that** when the two longitudinal side walls (10, 12) are horizontally pushed together, the connecting strut (T), which is moved at the same time, can be moved between the two longitudinal connectors (17, 18) and fixed between two clamping arms (36, 37) in the region of the fixing device(s) (24, 24').

17. Container for sales and transport according to any of claims 5 to 16, **characterised in that** the clamping arms (36, 37) of the fixing device (24, 24'), which receive the connecting strut (T), are held on a carrier arm (38), the other end of which is connected to the longitudinal connector (17, 18), the fixing devices (24, 24') that engage at the two end regions of the connector strut (T) having substantially equal dimensions (measurement 39) in the region of the carrier arm (38).

18. Container for sales and transport according to claim 17, **characterised in that** the two clamping arms (36, 37) are designed as expandable spring plates (arrow Q, Q'), the retention force of which can be overcome by manually moving the grippedside walls (10, 12).

19. Container for sales and transport according to any of claims 1 to 18, **characterised in that** the connecting strut (T, T') is designed to as a tubular profile part, as a rod part or as a similar carrier profile (21).

## Revendications

1. Conteneur pliant (1) pour la vente et le transport, avec un cadre de base (G) composé de barres transversales ou éléments de liaison longitudinaux (2, 3), présentant quatre pieds d'angle (4, 5, 6, 7) et passant sous au moins une partie de fond (8), sur lequel des parois latérales transversales et/ou longitudinales (9, 10, 11, 12) respectives sont maintenues pivotantes au moyen de renforts verticaux (13, 14, 15, 16) en bordure respectifs, de telle sorte qu'au moins deux des parois opposées (10, 12) sont pivotantes autour d'un axe vertical (H) défini par le renfort vertical (13, 15) respectif et que dans une position repliée ainsi obtenue, plusieurs des conteneurs (1, 1') peuvent être amenés dans une position de non utilisation compacte, dans lequel le cadre de base (G) présente entre deux renforts verticaux (13, 14 ou 15, 16) qui coopèrent au niveau d'une paroi latérale (9, 11) respectivement une entretoise stationnaire (17, 18) comme un élément de liaison longitudinal, et ces deux parois latérales (9, 11) opposées sont reliées au niveau des deux entretoises (17, 18) à au moins un renfort de liaison (T, T') de façon à définir une structure de soutien en forme de Z du cadre de base (G), **caractérisé en ce que** le renfort de liaison (T, T') peut être fixé de manière articulée en ses points de liaison (P, P') avec l'entretoise (17, 18) respective.

2. Conteneur pour la vente et le transport selon la revendication 1, **caractérisé en ce que** sur le cadre de base (G), plusieurs renforts de liaison (T, T') parallèles sont prévus.

3. Conteneur pour la vente et le transport selon la revendication 1 ou 2, **caractérisé en ce que** le renfort de liaison (T, T') est réalisé en plusieurs pièces dans sa direction longitudinale, les pièces étant reliées de manière articulée et/ou télescopique.

4. Conteneur pour la vente et le transport selon l'une quelconque des revendications 1 à 3, **caractérisé en ce que** le renfort de liaison (T, T') est maintenu de manière amovible sur au moins l'un des renforts (17, 18) et **en ce que** le point de liaison (P, P') respectivement inamovible du renfort de liaison (T) est réalisé sous la forme d'une articulation.

5. Conteneur pour la vente et le transport selon l'une quelconque des revendications 1 à 4, **caractérisé en ce que** la structure de soutien en forme de Z du cadre de base (G, G') présente au niveau du renfort de liaison (T, T') au moins une articulation de soutien (23, 23') prévue pour ajuster au moins l'une des parois latérales (9, 11).

6. Conteneur pour la vente et le transport selon l'une quelconque des revendications 1 à 5, **caractérisé en ce qu'**au moins une articulation de soutien (23, 23') est prévue respectivement au niveau des deux extrémités du renfort de liaison (T).

7. Conteneur pour la vente et le transport selon la revendication 5 ou 6, **caractérisé en ce que** les articulations de soutien (23, 23') sont prévues pour un rapprochement substantiellement horizontal des deux parois latérales longitudinales (9, 11), et **en ce que** le renfort de liaison (T) est alors mobile entre les deux éléments de liaison longitudinaux (17, 18).

8. Conteneur pour la vente et le transport selon l'une quelconque des revendications 5 à 7, **caractérisé en ce que** le renfort de liaison (T) est muni d'un dispositif de fixation (24, 24') au niveau d'au moins l'une des articulations de soutien (23, 23').

9. Conteneur pour la vente et le transport selon l'une quelconque des revendications 5 à 8, **caractérisé en ce qu'**au niveau des deux extrémités du renfort de liaison (T), respectivement un dispositif de fixation (24, 24') est prévu, et **en ce que**, dans la position d'utilisation, le dispositif de fixation (24, 24') est actif entre le renfort de liaison (T) et l'élément de liaison longitudinal (17, 18) respectivement le plus proche.

10. Conteneur pour la vente et le transport selon l'une quelconque des revendications 5 à 9, **caractérisé en ce que** le dispositif de fixation (24, 24') est muni d'un levier pivotant (25) prenant appui de manière articulée sur l'élément de liaison longitudinal (17, 18), **en ce que** ledit levier pivotant (25) est maintenu au niveau d'une charnière (26) sur l'élément de liaison longitudinal (17 ou 18) au moyen d'une plaque de soutien (27), d'une part, et présente un épaulement de serrage (28) orienté vers le renfort de liaison (T), d'autre part, ledit épaulement pouvant être commandé avec la main ou le pied au moyen d'une patte de commande (29).

11. Conteneur pour la vente et le transport selon l'une quelconque des revendications 5 à 10, **caractérisé en ce que** le cadre de base (G) présente quatre roulettes (30) au niveau du contour de soutien en forme de Z, dans lequel, au niveau des éléments de liaison longitudinaux (17, 18) sur les bords longitudinaux, respectivement deux roulettes (30, 30') qui coopèrent sont prévues, et les roulettes (30, 30') peuvent être freinées par paires, de telle sorte que les roulettes (30, 30') sont reliées par paires par un dispositif de freinage (31).

12. Conteneur pour la vente et le transport selon la revendication 11, **caractérisé en ce que** le dispositif de freinage (31) présente une tige de commande (32) s'étendant entre les deux roulettes (30, 30'), munie dans sa direction longitudinale de deux cames d'actionnement (K, K') à commander lors du blocage (F) ou du déblocage (F') des freins (30, 30'), **en ce que** ces deux cames d'actionnement (K, K') agissent comme des pédales respectives et s'appliquent par un épaulement de guidage (33, 33') côté extrémité sur l'actionneur (34) du frein (30, 30') respectif.

13. Conteneur pour la vente et le transport selon l'une quelconque des revendications 5 à 12, **caractérisé en ce que** le renfort de liaison (T) muni d'au moins une articulation de soutien (23, 23') peut être déplacé par rapport à un dispositif de fixation (24, 24') prévu au niveau des éléments de liaison longitudinaux (17, 18).

14. Conteneur pour la vente et le transport selon l'une quelconque des revendications 5 à 13, **caractérisé en ce qu'**au moins ladite respectivement une articulation de soutien (23, 23') est prévue au niveau des deux extrémités du renfort de liaison (T), et **en ce qu'**à distance de ces articulations de soutien (23, 23'), respectivement un dispositif de freinage (24, 24') est maintenu sur les éléments de liaison longitudinaux (17, 18).

15. Conteneur pour la vente et le transport selon l'une quelconque des revendications 5 à 14, **caractérisé en ce que** les parois latérales transversales (9, 11) peuvent pivoter vers les parois latérales longitudinales (10, 12) respectives, et **en ce qu'**ensuite, les articulations de soutien (23, 23') peuvent être utilisées pour ajuster les parois latérales (10, 12) de telle sorte que les parois latérales (10, 12) sont rapprochées horizontalement l'une de l'autre, permettant ainsi de saisir le renfort de liaison (T) solidaire en pivotement du dispositif de fixation (24, 24') et donc de fixer la position de rangement du conteneur (1).

16. Conteneur pour la vente et le transport selon l'une quelconque des revendications 5 à 15, **caractérisé en ce que** lors du rapprochement horizontal des deux parois latérales longitudinales (10, 12), le renfort de liaison (T) solidaire en pivotement peut être déplacé entre les deux éléments de liaison longitudinaux (17, 18) et peut être fixé au niveau du dispositif de fixation (24, 24') entre deux branches de serrage (36, 37).

17. Conteneur pour la vente et le transport selon l'une quelconque des revendications 5 à 16, **caractérisé en ce que** les branches de serrage (36, 37) recevant le renfort de liaison (T) du dispositif de fixation (24, 24') sont maintenues sur un bras de support (38) relié à l'élément de liaison longitudinal (17, 18) à l'autre extrémité, dans lequel les dispositifs de fixation (24, 24') s'appliquant aux deux zones d'extrémité du renfort de liaison (T) présentent des dimensions (cote 39) substantiellement identiques au niveau des bras de support (38).

18. Conteneur pour la vente et le transport selon la revendication 17, **caractérisé en ce que** les deux branches de serrage (36, 37) sont réalisées sous forme de lames de ressort extensibles (flèche Q, Q') dont la force de retenue peut être surmontée par un décalage manuel des parois latérales (10, 12) saisies.

19. Conteneur pour la vente et le transport selon l'une quelconque des revendications 1 à 18, **caractérisé en ce que** le renfort de liaison (T, T') est réalisé sous la forme d'un profilé tubulaire, d'une tringle ou d'un profilé de support similaire (21).
